# EUROPÄISCHE PATENTSCHRIFT

(11) **EP 0 799 414 B1**
(45) Veröffentlichungstag und Bekanntmachung des Hinweises auf die Patenterteilung: **16.05.2001**
(21) Anmeldenummer: 95932019.3
(22) Anmeldetag: 09.09.1995
(51) Int. Cl.: G01M 3/20

(54) **GEGENSTROM-SCHNÜFFELLECKSUCHER**
COUNTERFLOW SNIFFING LEAK INDICATOR
DETECTEUR DE FUITES RENIFLEUR A CONTRE-COURANT

(30) Priorität: 22.12.1994 DE 4445829
(43) Veröffentlichungstag der Anmeldung: 08.10.1997
(73) Patentinhaber: Balzers und Leybold Deutschland Holding Aktiengesellschaft, 63450 Hanau (DE)
(72) Erfinder: BÖHM, Thomas, D-50933 Köln (DE)
(74) Vertreter: Leineweber, Jürgen, Dipl.-Phys.
(86) Internationale Anmeldenummer: EP9503554
(87) Internationale Veröffentlichungsnummer: WO9619721

(56) Entgegenhaltungen:
- EP-A- 0 242 684
- FR-A- 2 283 431
- US-A- 5 301 537

## Beschreibung

Die Erfindung bezieht sich auf Schnüffellecksucher mit einem Massenspektrometer als Detektor und mit einer die Druckdifferenz zwischen dem Atmospährendruck im Einlassbereich des Schnüffelschlauches und dem Druck in seinem Auslassbereich aufrechterhaltenden Drosselung.

Ein Lecksucher dieser Art ist aus der US-A-53 01 537 bekannt. Er ist mit zwei Schnüffelschläuchen 59 ausgerüstet, die über ein Ventil 54 in eine gemeinsame Einlassleitung 52 münden. Die Einlassleitung 52 ist an den Einlass einer Vorvakuumpumpe 40 und an die Einlassseite der Hochvakuumpumpe 36 angeschlossen. Sie ist mit einer Drossel 44 ausgerüstet. Es wird erwähnt, dass die Schnüffelschläuche 59 eine drosselnde Wirkung haben. Diese reicht aber offensichtlich nicht aus, die Druckdifferenz zwischen dem Einlassbereich der Schnüffelschläuche 59 und der Einlassseite der Hochvakuumpumpe 36 aufrechtzuerhalten, da zusätzlich die Drossel 44 vorhanden sein muss.

Schnüffellecksucher sind außerdem aus der DE-B-24 41 124 bekannt. Bei der in diesem Dokument als bekannt vorausgesetzten Version ist im Einlassbereich des Schnüffelschlauches eine Drossel vorgesehen. Der Schnüffellecksucher gemäß dem Patentanspruch 1 des genannten Dokumentes weist eine Drossel auf, die unmittelbar vor dem Massenspektrometerdetektor angeordnet ist. Ein Teil des zur Drossel gelangenden Gasstromes wird von einer Vorvakuumpumpe abgesaugt. Bei allen vorbekannten Versionen ist nicht zu vermeiden, dass ein Teil der aus einem gegebenenfalls vorhandenen Leck ausströmenden Testgase nicht in den Einlass des Lecksuchers gelangt.

Um bei einem Lecksucher mit den eingangs erwähnten Merkmalen sowohl eine kurze Ansprechzeit als auch eine hohe Nachweisempfindlichkeit zu erreichen, werden die in den kennzeichnenden Teilen der Patentansprüche enthaltenen Maßnahmen vorgeschlagen.

Durch diese Maßnahme wird erreicht, dass stets der maximal zulässige Gasstrom durch den Schnüffelschlauch hindurchtritt. Da die bei der Helium-Testgaslecksuche interessierenden Lecks in der Größenordnung von 10⁻² mbar/l/sec liegen, ist sichergestellt, dass der gesamte Testgasstrom, der aus einem evtl. vorhandenen Leck entweicht, angesaugt wird und in den Lecksucher gelangt. Dadurch ergibt sich eine hohe Nachweisempfindlichkeit. Da darüberhinaus die Strömungsgeschwindigkeit im erfindungsgemäß bemessenen Schnüffelschlauch relativ hoch ist, ergibt sich zusätzlich auch eine kurze Ansprechzeit. Die angegebenen Vorteile werden besonders gut erreicht, wenn der Schnüffelschlauch über seine gesamte Länge einen einheitlichen Durchmesser hat, so dass er insgesamt die gewünschte Drosselung bewirkt. Zur Lösung der gestellten Aufgabe reicht es jedoch bereits aus, wenn nur ein größerer Abschnitt des Schnüffelschlauches, z. B. 50 oder 75 % seiner Länge, eine drosselnde Funktion hat, während der Restabschnitt das zu untersuchende Gas ohne wesentlichen Widerstand dem Lecksucher zuführt.

Ein besonderer Vorteil ergibt sich im Rahmen der vorliegenden Erfindung in Bezug auf die Kalibrierung. Bei einem Schnüffellecksucher der erfindgungsgemäßen Art reicht es aus, wenn zum Zwecke der Kalibrierung im Bereich der Verbindungsleitung zwischen Hochvakuumpumpe und Vorvakuumpumpe eine bekannte Menge Testgas mit Hilfe eines Testlecks eingelassen wird. Eine Kalibrierung mit einem externen Testleck, welche bisher bei Schnüffellecksuchern erforderlich war, entfällt.

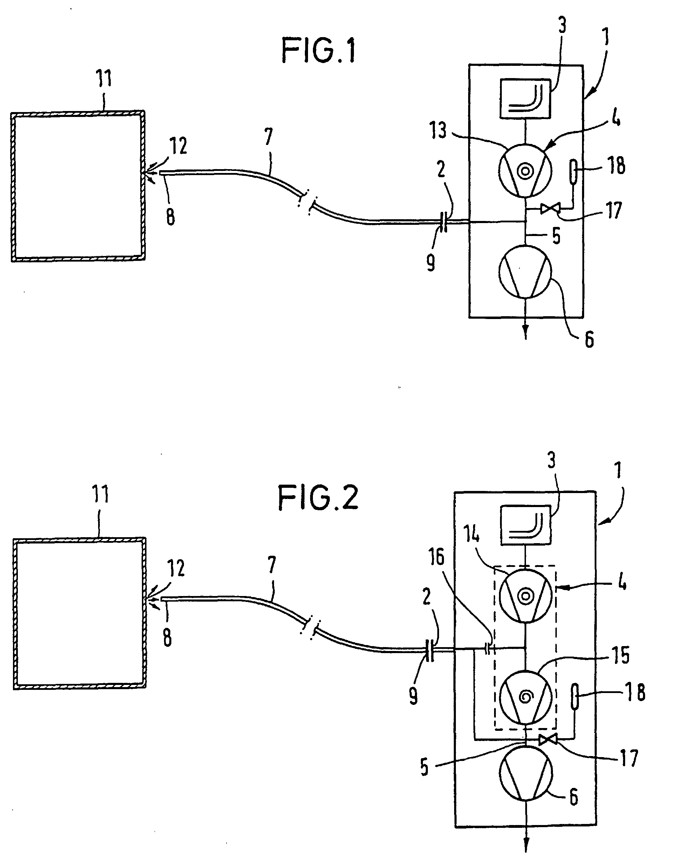

Weitere Vorteile und Einzelheiten sollen anhand der Figuren 1 und 2 erläutert werden.

In beiden Figuren 1 und 2 ist das schematisch dargestellte Lecksuchgerät mit 1, sein Eingang mit 2 bezeichnet. Es umfaßt das Massenspektrometer 3, das mit dem Einlaß der Hochvakuumpumpe 4, vorzugsweise einer Turbomolekularpumpe, in Verbindung steht. Die Hochvakuumpumpe 4 ist über die Verbindungsleitung 5 mit der Vorvakuumpumpe 6 verbunden.

An den Einlaß 2 des Lecksuchers 1 ist der Schnüffelschlauch 7 angeschlossen. Die beiden Enden des Schnüffelschlauches sind mit 8 (Einlaß) und 9 (Austritt) bezeichnet. Mit seinem Einlaßbereich 8 wird der Schnüffelschlauch über die leckverdächtigten Bereiche eines Prüflings 11 geführt. Ein Leck ist dargestellt und mit 12 bezeichnet.

Beim Lecksucher nach Figur 1 ist der Einlaß 2 des Lecksuchers 1 mit der Verbindungsleitung 5 verbunden. Als im Gegenstrom betriebene Hochvakuumpumpe 4 ist eine Turbomolekularvakuumpumpe 13 gewählt.

Beim Lecksucher nach Figur 2 umfaßt die Hochvakuumpumpe 4 eine hochvakuumseitig gelegene Stufe 14 (vorzugsweise eine Turbomolekularpumpenstufe) und eine vorvakuumseitig gelegene Stufe 15 (vorzugsweise eine Molekularpumpenstufe). Die Hochvakuumpumpe 4 ist mit einem Anschluß 16 ausgerüstet, der mit dem Bereich zwischen den Hochvakuumpumpenstufen 14 und 15 in Verbindung steht. Der Einlaß 2 des Lecksuchers 1 kann wahlweise (mit Hilfe nicht dargestellter Ventile) an die Verbindungsleitung 5 zwischen Hochvakuumpumpe 4 und Vorpumpe 6 oder - zur Steigerung der Empfindlichkeit - an den Einlaß 16 der Hochvakuumpumpe 4 angeschlossen werden.

Die Dimensionen des Schnüffelschlauchs 7 (Länge, Innendurchmesser), sind derart gewählt, daß er in der Lage ist, die Druckdifferenz zwischen dem Atmosphärendruck in seinem Einlaßbereich 8 und dem Druck der im Bereich seines Austrittes 9 aufrechtzuerhalten. Der Druck im Bereich seines Austrittes 9 beträgt ca. 2 mbar, wenn der Einlaß 2 des Lecksuchers 1 an die Verbindungsleitung zwischen Hochvakuumpumpe 4 und Vorvakuumpumpe 6 angeschlossen ist (Figur 1). Steht der Einlaß 2 des Lecksuchers 1 mit dem Anschluß 16 der Hochvakuumpumpe 4 in Verbindung (Figur 2), beträgt der Druck im Austrittsbereich 9 des Schnüffelschlauches 7 etwa 0,1 bar. Ein etwa 4 m langer Schnüffelschlauch 7 mit einem Innendurchmesser von etwa 0,4 mm hat die gewünschte Drosselwirkung. In einem derartigen Schnüffelschlauch ergibt sich ein Gasdurchfluß von etwa 0,4 mbar/L/sec. Bei einem längeren Schnüffelschlauch 7 muß ein größerer Innendurchmesser, bei einem kürzeren Schnüffelschlauch ein kleinerer Innendurchmesser gewählt werden.

An die Verbindungsleitung 5 zwischen der Hochvakuumpumpe 4 und der Vorvakuumpumpe 6 ist außerdem noch über ein Ventil 17 ein Testleck 18 angeschlossen. Wegen der besonderen Eigenschaften des Schnüffelschlauchs 7 reicht es aus, wenn die Kalibrierung des Lecksuchers mit dem eingebauten Testleck 18 durchgeführt wird. Eine Kalibrierung mit einem externen Testleck ist nicht mehr erforderlich.

## Patentansprüche

1. Schnüffellecksucher (1) mit einem Massenspektrometer (3) als Detektor und mit einer die Druckdifferenz zwischen dem Atmosphärendruck im Einlassbereich (8) des Schnüffelschlauches (7) und dem Druck in seinem Auslassbereich (9) aufrechterhaltenden Drosselung, dadurch gekennzeichnet, dass der Lecksucher (1) als Gegenstromlecksucher mit einer im Gegenstrom vom Testgas durchströmten Hochvakuumpumpe (4, 13) oder Hochvakuumpumpenstufe (14) ausgebildet ist, dass der Schnüffelschlauch (7) unmittelbar an die Auslassseite der Hochvakuumpumpe bzw. Hochvakuumpumpenstufe angeschlossen ist und dass zumindest ein Abschnitt des Schnüffelschlauchs (7), vorzugsweise der gesamte Schnüffelschlauch (7), derart bemessen und ausgebildet ist, dass die gewünschte Drosselung nur durch die Drosselwirkung des Schnüffelschlauches (7) selbst erreicht wird und dass der gesamte den Schnüffelschlauch (7) durchströmende Gasstrom zur Auslassseite der Hochvakuumpumpe bzw. Hochvakuumstufe gelangt.

2. Lecksucher nach Anspruch 1, dadurch gekennzeichnet, daß der Einlaß (2) des Lecksuchers (1) an eine Leitung (5) angeschlossen ist, die die Hochvakuumpumpe (4) mit einer Vorvakuumpumpe (6) verbindet.

3. Lecksucher nach Anspruch 2, dadurch gekennzeichnet, daß die Hochvakuumpumpe (4) eine Turbomolekularpumpe (13) ist.

4. Lecksucher nach Anspruch 1, dadurch gekennzeichnet, daß die Hochvakuumpumpe (4) zwei Stufen (14, 15) aufweist, daß sie mit einem in den Zwischenbereich zwischen den beiden Stufen (14, 15) mündenden Einlaß (16) ausgerüstet ist und daß der Einlaß (2) des Lecksuchers (1) mit dem Einlaß (16) der Hochvakuumpumpe (4) verbindbar ist.

5. Lecksucher nach einem der Ansprüche 1 bis 4, dadurch gekennzeichnet, daß an die Verbindungsleitung (5) zwischen Hochvakuumpumpe (4) und Vorvakuumpumpe (6) ein Testleck (14) angeschlossen ist.

6. Lecksucher nach einem der Ansprüche 1 bis 5, dadurch gekennzeichnet, daß der Schnüffelschlauch (7) bei einer Länge von 4 m einen Innendurchmesser von 0,4 mm hat.

## Claims

1. Sniffer-type leak detector (1) having a mass spectrometer (3) as a detector and having throttling which maintains the pressure difference between the atmospheric pressure in the inlet region (8) of the sniffer tube (7) and the pressure in its outlet region (9), characterized in that the leak detector (1) is designed as a countercurrent leak detector having a high vacuum pump (4, 13) or high vacuum pump stage (14) swept countercurrently by the test gas, that the sniffer tube (7) is connected directly to the outlet side of the high vacuum pump or high vacuum pump stage and that at least one portion of the sniffer tube (7), preferably the entire sniffer tube (7), is dimensioned and designed in such a way that the desired throttling is achieved only by the throttling action of the sniffer tube (7) itself and that the entire gas stream flowing through the sniffer tube (7) passes to the outlet side of the high vacuum pump or high vacuum pump stage.

2. Leak detector according to claim 1, characterized in that the inlet (2) of the leak detector (1) is connected to a line (5), which connects the high vacuum pump (4) to a backing pump (6).

3. Leak detector according to claim 2, characterized in that the high vacuum pump (4) is a turbomolecular pump (13).

4. Leak detector according to claim 1, characterized in that the high vacuum pump (4) comprises two stages (14, 15), that the high vacuum pump is equipped with an inlet (16), which opens into the intermediate region between the two stages (14, 15), and that the inlet (2) of the leak detector (1) is connectable to the inlet (16) of the high vacuum pump (4).

5. Leak detector according to one of claims 1 to 4, characterized in that a test leak (18) is connected to the connecting line (5) between high vacuum pump (4) and backing pump (6).

6. Leak detector according to one of claims 1 to 5, characterized in that the sniffer tube (7), given a length of 4 m, has an inside diameter of 0.4 mm.

## Revendications

1. Détecteur (1) de fuite à reniflard comportant un spectromètre de masse (3) en tant que détecteur et comportant un étranglement qui maintient la différence entre la pression atmosphérique dans la zone d'entrée (8) du tuyau (7) du reniflard et la pression dans la zone de sortie (9) de ce tuyau, caractérisé en ce que le détecteur de fuite (1) est agencé sous la forme d'un détecteur de fuite à contre-courant comportant une pompe à vide poussé (4,13) ou un étage (14) de pompe à vide poussé, qui est traversé à contre-courant par le gaz de test, que le tuyau (7) du reniflard est raccordé directement au côté extérieur de la pompe à vide poussé ou de l'étage de pompe à vide poussé et qu'au moins une partie du tuyau (7) du reniflard, de préférence l'ensemble du tuyau (7) du reniflard, est dimensionnée et agencée de telle sorte que l'étranglement désiré est obtenu uniquement par l'action d'étranglement du tuyau (7) du reniflard lui-même et que l'ensemble du courant de gaz, qui traverse le tuyau (7) du reniflard, parvient au côté sortie de la pompe à vide poussé ou de l'étage de pompe à vide poussé.

2. Détecteur de fuite selon la revendication 1, caractérisé en ce que l'entrée (2) du détecteur de fuite (1) est raccordée à une canalisation (5), qui relie la pompe à vide poussé (4) à une pompe (6) de création de vide amont.

3. Détecteur de fuite selon la revendication 2, caractérisé en ce que la pompe à vide poussé (4) est une pompe turbomoléculaire (13).

4. Détecteur de fuite selon la revendication 1, caractérisé en ce que la pompe à vide poussé (4) comporte deux étages (14,15) et est équipée d'une entrée (16) qui débouche dans la zone située entre les deux étages (14,15), et que l'entrée (2) du détecteur de fuite (1) peut être reliée à l'entrée (16) de la pompe à vide poussé (4).

5. Détecteur de fuite selon l'une des revendications 1 à 4, caractérisé en ce qu'une sonde de test de fuite (18) est raccordée à la canalisation de raccordement (5) entre la pompe à vide poussé (4) et la pompe à vide amont (6).

6. Détecteur de fuite selon l'une des revendications 1 à 5, caractérisé en ce que le tuyau (7) du reniflard possède un diamètre intérieur de 0,4 mm pour une longueur de 4 m.
